# EUROPEAN PATENT APPLICATION

(11) **EP 4 822 496 A1**
(43) Date of publication of application: **14.10.2026**
(21) Application number: 26167988.0
(22) Date of filing: 26.03.2026
(51) Int. Cl.: G06F 3/0354, G06F 3/01, G06F 3/041, G06F 3/044

(54) **TOUCHPAD DEVICE**

(30) Priority: 11.04.2025 CN 202510454607
(71) Applicant: TPK Glass Solutions (Xiamen) Inc., Fujian, Xiamen 361115 (CN)
(72) Inventor: YE, Cai-Jin, Fujian, Xiamen City, 361010 (CN); LIN, Wei-Yi, 338202 Taoyuan City (TW)
(74) Representative: Goddar, Heinz J.

(57) **Abstract**

A touchpad device includes a protection layer, a multi-layer touch circuit board, an adhesive layer, and a pressure sensing element. The adhesive layer is disposed between the protection layer and the multi-layer touch circuit board. The pressure sensing element is disposed on the multi-layer touch circuit board. One layer of the multi-layer touch circuit board or the adhesive layer has a non-homogeneous material configuration and includes a high deformation region and a low deformation region. The pressure sensing element is connected to or at least partially overlaps a vertically projected range of the high deformation region.

## Description

### [ CROSS-REFERENCE TO RELATED APPLICATION]

This application claims priority to China Patent Application 202510454607.5, filed on April 11, 2025, which is incorporated herein by reference.

### BACKGROUND OF THE DISCLOSURE

### [ FIELD OF DISCLOSURE ]

The present disclosure relates to a touchpad device.

### [ DESCRIPTION OF PRIOR ART]

The current development trend of touchpad devices is the advancement from merely a touch function to an integration of touch, force sensing, and tactile feedback. A touchpad device of the prior art installs a force sensor on an elastic component (such as a metal bracket) and mounts the elastic component to a touch printed circuit board, for example, as described in China Patent Application No. 107025017B. However, the disadvantages of these devices of the prior art include the presence of a large number of elements, complex assembly processes, higher overall costs, and generally greater thickness.

Therefore, to provide a touchpad device that can solve the aforementioned problems is a major focus that the industry devotes its research and development resources in.

### [ SUMMARY]

In view of this, one objective of the present disclosure is to provide a touchpad device that can solve the aforementioned problems.

To achieve the aforementioned objective, according to one embodiment of the present disclosure, a touchpad device comprises a protection layer, a multi-layer touch circuit board, an adhesive layer, and a pressure sensing element. The adhesive layer is disposed between the protection layer and the multi-layer touch circuit board. The pressure-sensing element is disposed on the multi-layer touch circuit board. One layer of the multi-layer touch circuit board or the adhesive layer has a non-homogeneous material configuration and comprises a high deformation region and a low deformation region. The pressure sensing element is adjacent to or at least partially overlaps a vertically projected range of the high deformation region.

In one or several embodiments of the present disclosure, the high deformation region is a through slot.

In one or several embodiments of the present disclosure, the pressure sensing element is a strain gauge, and the pressure sensing element is disposed on one side of the multi-layer touch circuit board away from the protection layer.

In one or several embodiments of the present disclosure, the multi-layer touch circuit board comprises a first circuit board stack, a second circuit board stack, and a bonding layer. The first circuit board stack is disposed on one side of the adhesive layer away from the protection layer. The second circuit board stack is located on one side of the first circuit board stack away from the adhesive layer. The bonding layer is bonded between the first circuit board stack and the second circuit board stack, and comprises the high deformation region.

In one or several embodiments of the present disclosure, an equivalent hardness of an assembly of the protection layer, the adhesive layer, and the first circuit board stack is higher than an equivalent hardness of the second circuit board stack.

In one or several embodiments of the present disclosure, a material of the bonding layer comprises polypropylene (PP), and a thickness of the bonding layer is from 50 µm to 500 µm.

In one or several embodiments of the present disclosure, the pressure sensing element is a self-capacitance force sensor. The pressure sensing element is disposed within the multi-layer touch circuit board.

In one or several embodiments of the present disclosure, the pressure sensing element is disposed on the second circuit board stack, the first circuit board stack comprises a metal layer, and the pressure sensing element is configured to detect a capacitance between the pressure sensing element and the metal layer.

In one or several embodiments of the present disclosure, the touchpad device further comprises a metal bracket and an elastic member. The metal bracket is located on one side of the multi-layer touch circuit board away from the protection layer. The elastic member is disposed between the multi-layer touch circuit board and the metal bracket. The pressure sensing element is configured to detect a capacitance between the pressure sensing element and the metal bracket.

In one or several embodiments of the present disclosure, the elastic member is located within a vertically projected range of the high deformation region.

In summary, for touchpad device of the present disclosure, through having the pressure sensing element adjacent to or at least partially overlapping the vertically projected range of the high deformation region from one layer of the multi-layer touch circuit board or the adhesive layer, the pressure sensing element will effectively capture deformation (that is, an increase of sensitivity) and achieve more accurate pressure detection. By configuring the high deformation region in the bonding layer located between the first circuit board stack and the second circuit board stack, the location and degree of deformation can be controlled more accurately, leading to the optimization of pressure sensing performance. By having an equivalent hardness of an assembly of the protection layer, the adhesive layer, and the first circuit board stack, to be higher than an equivalent hardness of the second circuit board stack, the pressure will be concentrated mainly in the high deformation region. By disposing the pressure sensing element within the multi-layer touch circuit board, it may not only simplify the electric circuit design, but also reduce interference from the external environment, further improving sensing reliability. By disposing the elastic member within the vertically projected range of the high deformation region, the touchpad device will deform better in response to vertical vibrations, thus enhancing the effect of vertical vibration sensing.

The aforementioned statements are used to explain problems that the present disclosure intends to solve, the technical means for solving the problems, and the effect thereof. The present disclosure will become more fully understood from the detailed descriptions given herein below by way of embodiments with reference to the accompanying figures for illustration.

### [ BRIEF DESCRIPTION OF THE FIGURES]

To better understand the aforementioned objective and other objectives, novel features, advantages, and embodiments of the present disclosure, relevant figures are provided as follows:
Fig. 1 is a schematic figure of an electronic device according to an embodiment of the present disclosure.
Fig. 2 is a cross-sectional schematic figure of the touchpad device of Fig. 1.
Fig. 3 is a schematic figure of a top view of some elements of the touchpad device of Fig. 2.
Fig. 4 is a schematic figure of the touch electrode layer of the touch sensing element of Fig. 2.
Fig. 5 is a partially enlarged schematic figure of the first touch electrode layer of Fig. 4.
Fig. 6 is another partially enlarged schematic figure of the first touch electrode layer of Fig. 4.
Fig. 7 is a block figure of functions according to the touch sensing element of an embodiment of the present disclosure.
Fig. 8 is a cross-sectional schematic figure of the multi-layer touch circuit board of Fig. 2.
Fig. 9 is a schematic figure of a top view of the coil layer and the magnet set of an embodiment of the present disclosure.
Fig. 10 is a schematic figure of a top view of the coil layer and the magnet set of another embodiment of the present disclosure.
Fig. 11A is an enlarged schematic figure of the area M in Fig. 2 of a comparative example.
Fig. 11B is an enlarged schematic figure of the area M in Fig. 2 of the second embodiment.
Fig. 11C is an enlarged schematic figure of the area M in Fig. 2 of the third embodiment.
Fig. 11D is an enlarged schematic figure of the area M in Fig. 2 of the fourth embodiment.
Fig. 12 is a pressure output signal figure of the touchpad device having the designs of the comparative example, the first embodiment, the second embodiment, the third embodiment, and the fourth embodiment, respectively.
Fig. 13A, Fig. 13B, Fig. 13C, and Fig. 13D are cross-sectional schematic figures of the touchpad device for different embodiments of the present disclosure, respectively.
Fig. 14A, Fig. 14B, Fig. 14C, and Fig. 14D are cross-sectional schematic figures of the touchpad device for different embodiments of the present disclosure, respectively.
Fig. 15 is a cross-sectional schematic figure of the touchpad device of an embodiment of the present disclosure.

### [ DETAILED DESCRIPTION]

A plurality of embodiments of the present disclosure will be disclosed below with reference to figures. For the purpose of clear illustration, many details in practice will be described together with the following descriptions. However, these detailed descriptions in practice shall not be interpreted to limit the present disclosure in any way. That is, in several embodiments of the present disclosure, these details in practice are not necessarily required. Furthermore, for the purpose of simplifying the figures, some structures and components of the prior art shown in the figures will be illustrated schematically.

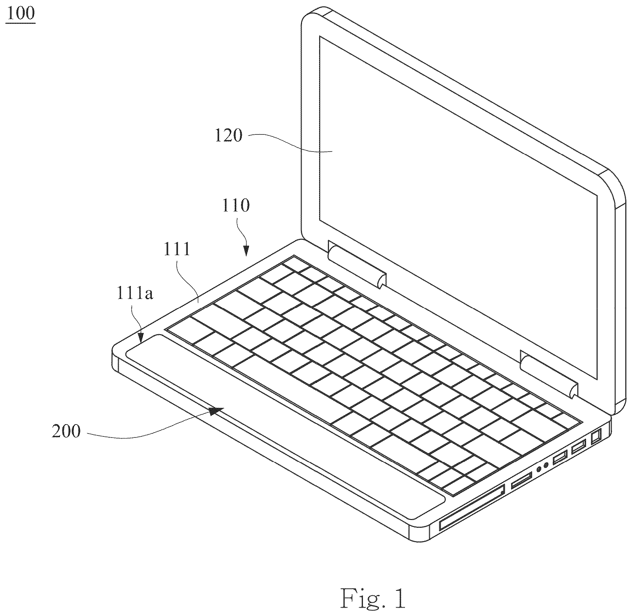

Please refer to Fig. 1, which is a schematic figure of an electronic device 100 according to an embodiment of the present disclosure. As illustrated in Fig. 1, in the embodiment, the electronic device 100 comprises a host computer 110, a display 120, and a touchpad device 200. The touchpad device 200 is disposed within the host computer 110, and is exposed to the outside from the recessed groove 111a of the casing part 111 of the host computer 110. The touchpad device 200 is an input device of the host computer 110 and is disposed therewithin; however, the present disclosure is not limited thereto. Furthermore, the touchpad device 200 is a rectangular area, consisting of a length and a width, wherein the width W (a long strip as shown in Fig. 1) may be adjusted according to the design of different models, and the size is not limited to that shown in Fig. 1. In actual applications, the touchpad device 200 may also be an electronic product using a touchpad as an input or operational interface (such as a personal digital assistant, keyboard having a touchpad, etc.). In other words, the concept of the touchpad device 200 of the present disclosure can be applied to any electronic product that uses a touchpad as an input or operational interface. Details of the touchpad device 200, including the structure and functions of some elements thereof, as well as connections and the operation relationship among these elements, will be provided below.

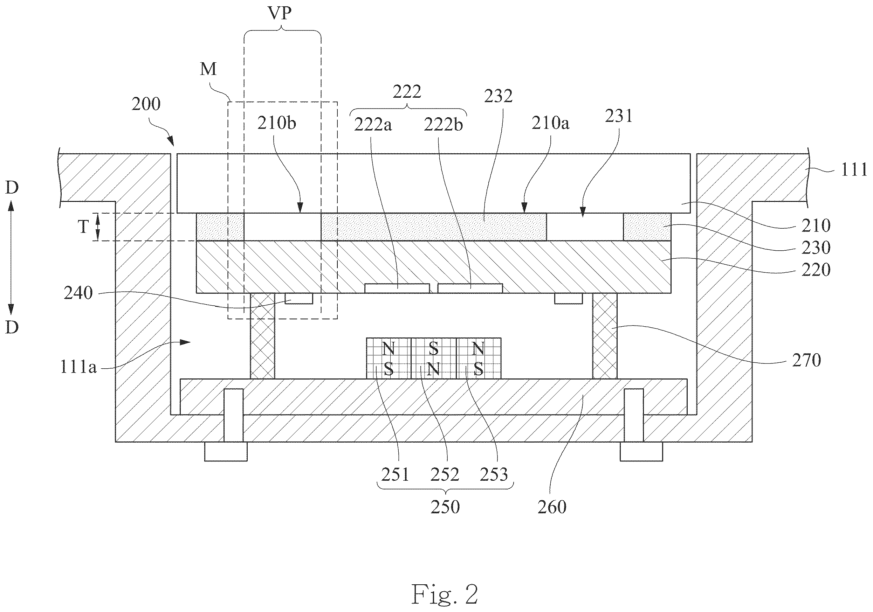

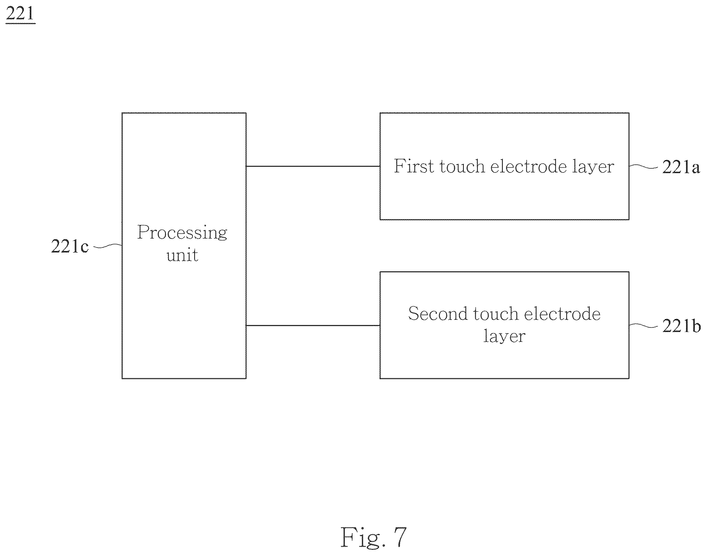

Please refer to Fig. 2, which is a cross-sectional schematic figure of the touchpad device 200 of Fig. 1. As illustrated in Fig. 2, in the embodiment, the touchpad device 200 comprises a protection layer 210, a multi-layer touch circuit board 220, an adhesive layer 230, a plurality of pressure sensing elements 240, and a plurality of elastic members 270. The protection layer 210 has a bonding area 210a and a non-bonding area 210b. The adhesive layer 230 is disposed between the protection layer 210 and the multi-layer touch circuit board 220, and has a low deformation region 232 corresponding to the bonding area 210a, as well as a plurality of high deformation regions 231 corresponding to the non-bonding area 210b. The multi-layer touch circuit board 220 is disposed on one side of the adhesive layer 230 away from the protection layer 210, and comprises a touch sensing element 221 (in reference to Fig. 7) and a coil layer 222. The pressure sensing elements 240 are disposed on the multi-layer touch circuit board 220. The touchpad device 200 further comprises a supporting member 260 and a magnet set 250 disposed on the supporting member 260. The supporting member 260 is fixed to the bottom surface of the recessed groove 111a of the casing part 111 (for example, using screws), wherein the recessed groove 111a of the casing part 111 is located on the outer surface of the casing part 111. The elastic members 270 are disposed between the multi-layer touch circuit board 220 and the supporting member 260. The magnet set 250 disposed on the supporting member 260 and the coil layer 222 disposed on the multi-layer touch circuit board 220 constitute a vibration module. The elastic members 270 are configured to reduce vibration noise and effectively release vibration stress in the vertical direction.

For example, the bonding area 210a of the protection layer 210 can be defined by the area of the bottom surface of the protection layer 210 that is bonded with the low deformation region 232 of the adhesive layer 230, while the non-bonding area 210b of the protection layer 210 can be defined by the area of the bottom surface of the protection layer 210 that is not bonded with the low deformation region 232 of the adhesive layer 230 (corresponding to the high deformation region 231). However, the present disclosure is not limited thereto.

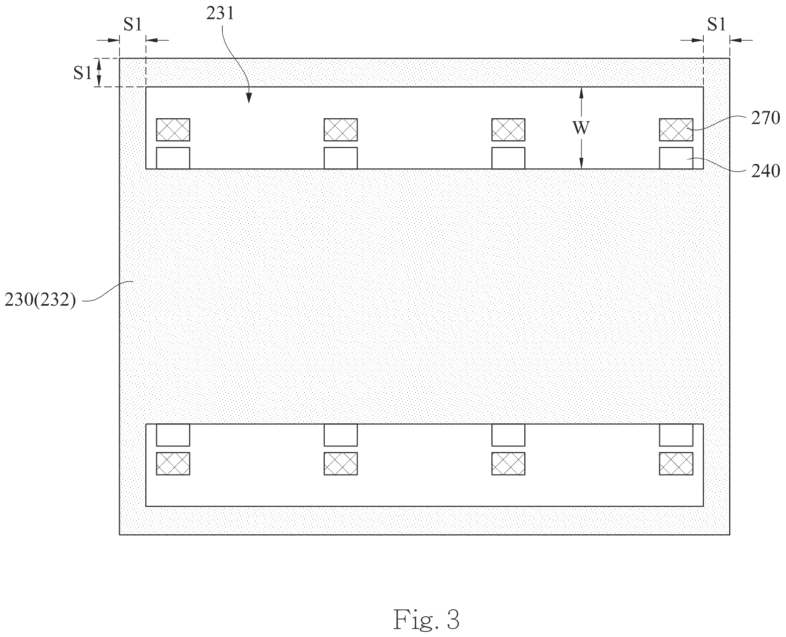

Please refer to Fig. 3, which is a schematic figure of a top view of some elements of the touchpad device 200 of Fig. 2. As illustrated in Fig. 2 and Fig. 3, in the embodiment, the high deformation region 231 is a through slot; however, the present disclosure is not limited thereto. More specifically, the pressure sensing element 240 is located within the vertically projected range VP of the high deformation region 231. The vertically projected range VP of the high deformation region 231, for example, may be defined by the projection of the high deformation region 231 in an arrangement direction D of the protection layer 210 and the adhesive layer 230; however, the present disclosure is not limited thereto. Hereby, this may ensure that the pressure sensing element 240 can effectively capture deformation (that is, an increase of sensitivity) and achieve more accurate pressure detection.

Furthermore, the elastic member 270 is located within the vertically projected range VP of the high deformation region 231 in the arrangement direction D of the protection layer 210 and the adhesive layer 230. By disposing the high deformation region 231 on the adhesive layer 230 that is disposed between the protection layer 210 and the multi-layer touch circuit board 220 and by having the elastic member 270 serve as a supporting point that corresponds to the high deformation region 231 in the arrangement direction D of the protection layer 210 and the adhesive layer 230, the touchpad device 200 may deform better in response to vertical vibrations, thus enhancing the effect of vertical vibration sensing.

In several embodiments, the material of the adhesive layer 230 comprises pressure sensitive adhesive (PSA); however, the present disclosure is not limited thereto.

In several embodiments, as shown in Fig. 2, the adhesive layer 230 has a thickness T ranging from 50 µm to 500 µm. If the thickness T of the adhesive layer 230 is thinner than 50 µm, the generated compression volume will be insufficient when the user presses the protection layer 210. If the thickness T of the adhesive layer 230 is thicker than 500 µm, interferences against the generation of detection capacitance signals with the touch sensing element 221 (as shown in Fig. 7) may occur.

In several embodiments, the Young's modulus of the elastic member 270 is within a range of 0.55 MPa to 0.8 MPa. Elastic members 270 having a Young's modulus within the aforementioned range may effectively reduce vibration noise and release vibration stress in the vertical direction.

In several embodiments, the material of the elastic member 270 may be silicone; however, the present disclosure is not limited thereto.

In several embodiments, the supporting member 260 is a silicon steel plate. The silicon steel plate has a permeability effect that can constrain the magnetic field from divergence, so that the magnetic field is more concentrated, while the magnetic field lines within the same range are also more concentrated.

As shown in Fig. 3, in the embodiment, one of the high deformation regions 231 (for example, the upper high deformation region 231) is adjacent to the edge of the adhesive layer 230 (for example, the upper edge of the adhesive layer 230) with a gap distance S1, and the distance S1 is larger than 2 mm. By limiting the range of the distance S1 between the high deformation region 231 and the adjacent edge of the adhesive layer 230, according to the aforementioned value, the problem of the adhesive layer 230 failing to hold firmly onto the protection layer 210 may be prevented. In addition, the gap distance between the upper high deformation region 231 and the right adjacent edge or left adjacent edge of the adhesive layer 230, can be set as the aforementioned distance S1 as shown in Fig. 3. The gap distance between the lower high deformation region 231 and the lower adjacent edge, or left adjacent edge, or right adjacent edge of the adhesive layer 230 may be set as the aforementioned distance S1 as shown in Fig. 3.

As shown in Fig. 3, in the embodiment, one of the high deformation regions 231 (for example, the upper high deformation region231) has a width W. The width W is larger than about 10 mm. By limiting the range of the width W of the high deformation regions 231 according to the aforementioned range, the problem of the deformation of the adhesive layer 230 being too small during vibration can be prevented. More specifically, the high deformation regions 231 have a shape of a long strip, wherein the aforementioned width W is the smaller dimension in the lateral direction of the high deformation regions 231. Relatively, the larger dimension in the lateral direction of the high deformation regions 231 is the length. The lower high deformation regions 231 shown in Fig. 3 may also be set to the aforementioned width W.

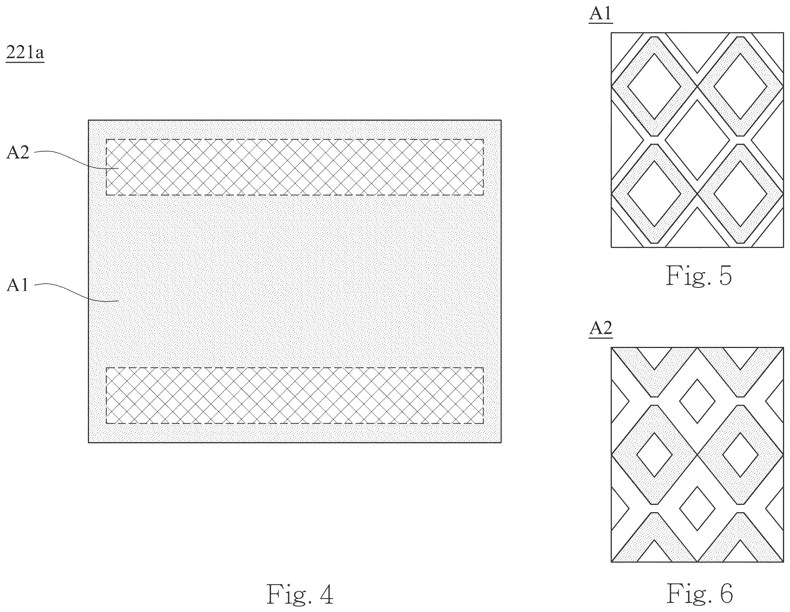

Please refer to Fig. 4, Fig. 5, and Fig. 6. Fig. 4 is a schematic figure of the touch electrode layer of the touch sensing element 221 in Fig. 2. Fig. 5 is a partially enlarged schematic figure of the first touch electrode layer 221a in Fig. 4. Fig. 6 is another partially enlarged schematic figure of the first touch electrode layer 221a in Fig. 4. As shown in Fig. 4 to Fig. 6, in the embodiment, the touch sensing element 221 comprises a first touch electrode layer 221a. The first touch electrode layer 221a has a first sensing area A1 and a second sensing area A2. The first sensing area A1 and the second sensing area A2 are corresponding to the bonding area 210a and the non-bonding area 210b, respectively (meaning the second sensing area A2 corresponds to the high deformation regions 231) in the arrangement direction D (in reference to Fig. 2). The coil width of the second sensing area A2 is larger than the coil width of the first sensing area A1.

According to Gauss's law, the capacitance is proportional to the permittivity of the medium. Therefore, when users perform taps on the protection layer 210, the touch sensing element 221 will produce differences between the detection capacitance signals of the bonding area 210a and the non-bonding area 210b (since the permittivity of the adhesive layer 230 is greater than the permittivity of the high deformation region 231). The aforementioned differences result in the fact that the detection capacitance signals produced by the touch sensing element 221, when users tap on the bonding area 210a of the protection layer 210, are significantly larger than the detection capacitance signals produced by the touch sensing element 221, when users tap on the non-bonding area 210b of the protection layer 210. In the embodiment, by having the coil width of the second sensing area A2, corresponding to the high deformation region 231, be larger than the coil width of the first sensing area A1, the technological effect of compensating differences in detection capacitance signals between the bonding area 210a and the non-bonding area 210b can be achieved by increasing the relevant areas. In other words, the touch sensing element 221 of the embodiment can compensate for the differences in detection capacitance signals by means of the magnetic pole structure.

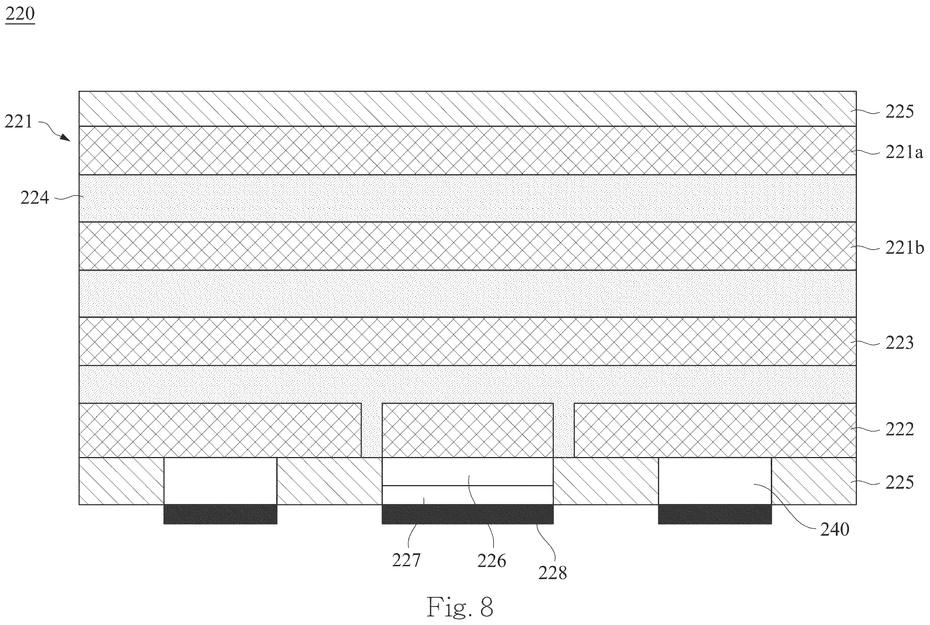

In several embodiments, the touch sensing element 221 further comprises a second touch electrode layer 221b (in reference to Fig. 8), and the second touch electrode layer 221b may have areas identical or similar to the first sensing area A1 and the second sensing area A2 of the first touch electrode layer 221a.

Please refer to Fig. 7, which is a block figure of functions according to the touch sensing element 221 of an embodiment of the present disclosure. As shown in Fig. 7, in the embodiment, the touch sensing element 221 further comprises a processing unit 221c. The processing unit 221c is electrically connected with the first touch electrode layer 221a and the second touch electrode layer 221b, and the processing unit 221c is configured to produce detection capacitance signals corresponding to the touch of the user on the protection layer 210 detected by the first touch electrode layer 221a and the second touch electrode layer 221b. In particular, the processing unit 221c is further configured to compensate for the differences in detection capacitance signals between the first sensing area A1 and the second sensing area A2. In other words, the touch sensing element 221 of the embodiment applies software methods to compensate for the differences in detection capacitance signals.

Please refer to Fig. 8, which is a cross-sectional schematic figure of the multi-layer touch circuit board 220 of Fig. 2. As shown in Fig. 8, in the embodiment, the multi-layer touch circuit board 220 further comprises a shielding layer 223. The first touch electrode layer 221a, the second touch electrode layer 221b, the shielding layer 223, and the coil layer 222 are stacked in order from top to bottom, and electrically insulated through the insulating layer 224. The multi-layer touch circuit board 220 further comprises two solder mask layers 225. These two solder mask layers 225 are disposed at the upper and bottom sides of the multi-layer touch circuit board 220, which cover and are in contact with the first touch electrode layer 221a and the coil layer 222, respectively.

As shown in Fig. 8, in the embodiment, the material of the coil layer 222 comprises copper. The multi-layer touch circuit board 220 further comprises a nickel layer 226. The nickel layer 226 covers the coil layer 222. By means of covering the coil layer 222 with the nickel layer 226 thereon, the magnetic field lines generated by the magnet set 250 on the coil layer 222 can be concentrated effectively. In the embodiment, the multi-layer touch circuit board 220 further comprises a gold layer 227. The gold layer 227 covers the nickel layer 226. By means of covering the nickel layer 226 with a gold layer 227 thereon, oxidation of the nickel layer 226 may be prevented. In the embodiment, the nickel layer 226 and the gold layer 227 are embedded in the solder mask layer 225. The multi-layer touch circuit board 220 further comprises a cover layer 228 that has an insulation function. The cover layer 228 covers the gold layer 227 to prevent the gold layer 227 from becoming exposed at the solder mask layer 225.

As illustrated in Fig. 2 and Fig. 8, in the embodiment, the pressure sensing elements 240 are configured in response to the deformation of the multi-layer touch circuit board 220 (for example, deformation of the protection layer 210 when pressed by users) to generate force sensing signals. When the pressure sensing elements 240 generate force sensing signals, the processing unit 221c, shown in Fig. 7, is configured to have the vibration module being controlled to generate different vibration forces according to the touch operations and force sensing signals, thus further providing the tactile feedback effect. Furthermore, as shown in Fig. 8, the pressure sensing elements 240 are embedded in the solder mask layer 225, the pressure sensing elements 240 are covered with a cover layer 228, and therefore the pressure sensing elements 240 will not emerge from the solder mask layer 225.

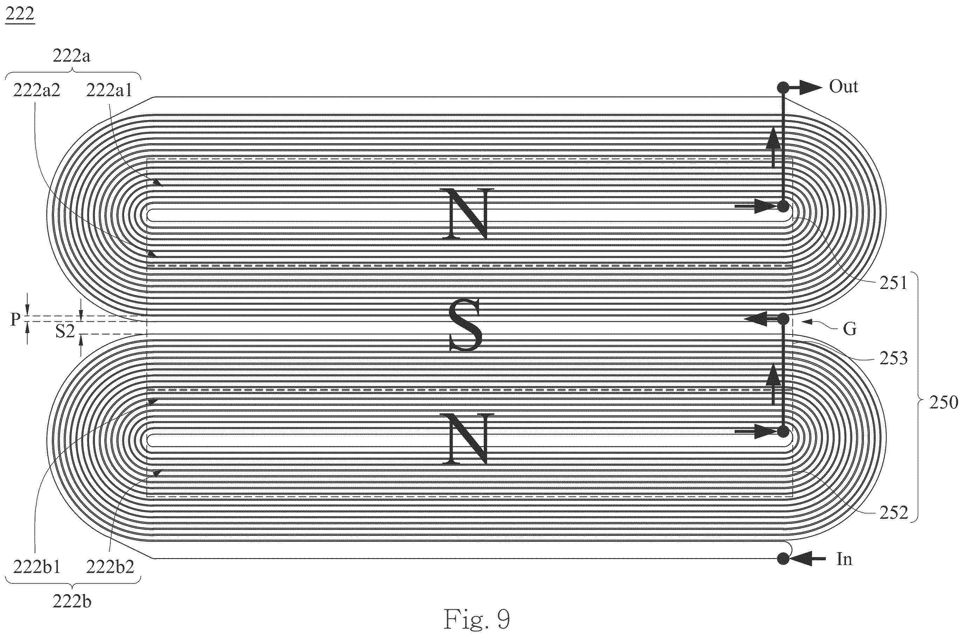

Please refer to Fig. 9, which is a schematic figure of a top view of the coil layer 222 and the magnet set 250 of an embodiment of the present disclosure. As shown in Fig. 9, in the embodiment, the coil layer 222 comprises a first coil unit 222a and a second coil unit 222b that are connected. The first coil unit 222a and the second coil unit 222b may be electrically coupled to external controllers (not shown in the figure). By setting the distance S2 between two coil units of the coil layer 222 essentially equal to the coil distance P of the coil units (that is, without keeping an assembly tolerance between the first coil unit 222a and the second coil unit 222b), the area utilization rate of the multi-layer touch circuit board 220 can be increased.

As shown in Fig. 9, along with Fig. 2, in the embodiment, the magnet set 250 comprises a first magnet 251, a second magnet 252, and a third magnet 253. The first magnet 251 has a first magnetic pole end, wherein the first magnetic pole end is facing the first coil unit 222a in the arrangement direction D (in reference to Fig. 2). The second magnet 252 has a second magnetic pole end, wherein the second magnetic pole end is facing the second coil unit 222b in the arrangement direction D. The third magnet 253 has a third magnetic pole end, wherein the third magnetic pole end is facing the gap G between the first coil unit 222a and the second coil unit 222b in the arrangement direction D. The third magnet 253 is disposed side by side with and located between the first magnet 251 and the second magnet 252 seamlessly. The polarity of the third magnetic pole end is different from the polarity of the first magnetic pole end and the polarity of the second magnetic pole end. In response to the aforementioned design of not keeping an assembly tolerance between the first coil unit 222a and the second coil unit 222b, through the arrangement of having two magnetic pole ends of two adjacent magnets of the magnet set 250 (that is, the first magnet 251 and the third magnet 253, or the second magnet 252 and the third magnet 253) in different polarities face towards the first coil unit 222a and the second coil unit 222b respectively, these two magnets can be disposed side by side seamlessly.

More specifically, as illustrated in Fig. 9, the first coil unit 222a and the second coil unit 222b are made with the same coil winding method and connected in series. The first coil unit 222a comprises two straight coil bundle sections, 222a1 and 222a2, wherein the two straight coil bundle sections, 222a1 and 222a2, are aligned horizontally and stacked vertically. The second coil unit 222b comprises two straight coil bundle sections, 222b1 and 222b2, wherein the two straight coil bundle sections, 222b1 and 222b2, are aligned horizontally and stacked vertically. The first magnet 251 is located underneath the straight coil bundle section 222a1 partially (in reference to the lower half portion in Fig. 9) and the straight coil bundle section 222a2 partially (in reference to the upper half portion in Fig. 9), while the polarity of the first magnetic pole end facing the straight coil bundle sections 222a1 and 222a2 is N pole. The second magnet 252 is located underneath the straight coil bundle section 222b1 partially (in reference to the lower half portion in Fig. 9) and the straight coil bundle section 222b2 partially (in reference to the upper half portion in Fig. 9), while the polarity of the second magnetic pole end facing the straight coil bundle sections 222b1 and 222b2 is N pole. The third magnet 253 is located underneath the straight coil bundle section 222a2 partially (in reference to the lower half portion in Fig. 9), the straight coil bundle section 222b1 partially (in reference to the upper half portion in Fig. 9), and the gap G between the first coil unit 222a and the second coil unit 222b, while the polarity of the third magnetic pole end facing the straight coil bundle sections 222a2 and 222b1 is S pole. The electric current flows into the outer edge connecting point of the second coil unit 222b (located in the lower right area of Fig. 9) and flows out from the inner edge connecting point of the second coil unit 222b. Subsequently, the electric current flowing out from the second coil unit 222b then flows (through the wire at the bottom) into the outer edge connecting point of the first coil unit 222a (located in the center right area of Fig. 9) and flows out (through the wire at the bottom) from the inner edge connecting point of the first coil unit 222a. Through the aforementioned configuration, the magnet set 250 and the coil layer 222 are structured to constitute a vertical vibration module.

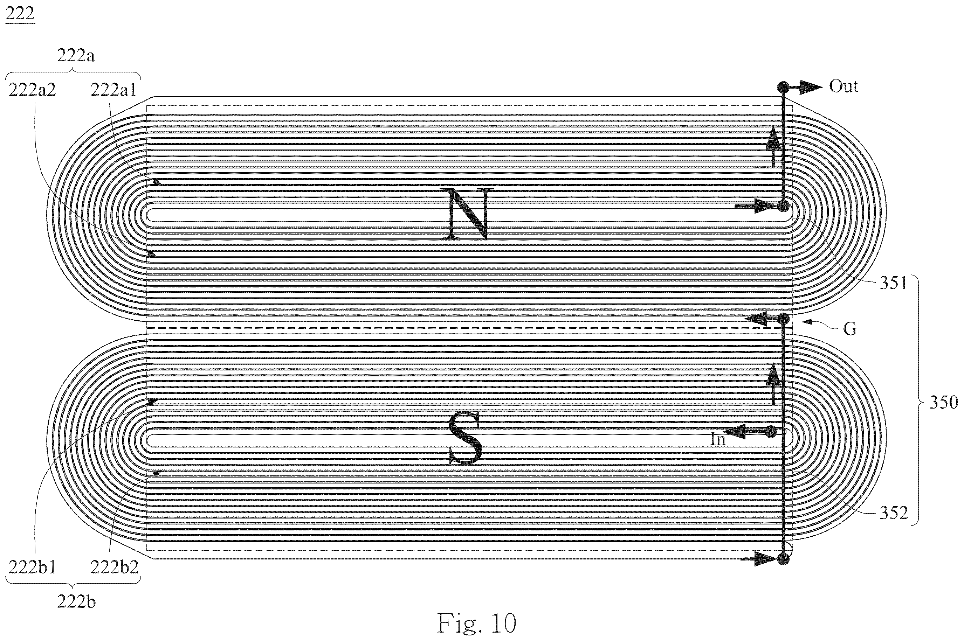

Please refer to Fig. 10, which is a schematic figure of a top view of the coil layer 222 and the magnet set 350 of another embodiment of the present disclosure. As shown in Fig. 10, in the embodiment, the magnet set 350 comprises a first magnet 351 and a second magnet 352. The first magnet 351 has a first magnetic pole end, wherein the first magnetic pole end is facing the first coil unit 222a in the arrangement direction D. The second magnet 352 has a second magnetic pole end, wherein the second magnetic pole end is facing the second coil unit 222b in the arrangement direction D. The first magnet 351 and the second magnet 352 are disposed side by side seamlessly. The polarity of the first magnet pole end is different from the polarity of the second magnetic pole end. In response to the aforementioned design of not keeping an assembly tolerance between the first coil unit 222a and the second coil unit 222b, through the arrangement of having the magnetic pole ends of the first magnet 351 and the second magnet 352 with different polarities face the first coil unit 222a and the second coil unit 222b respectively, the first magnet 351 and the second magnet 352 may be disposed side by side seamlessly.

More specifically, as shown in Fig. 10, the first magnet 351 is located underneath the straight coil bundle sections 222a1 and 222a2, while the polarity of the first magnetic pole end facing the straight coil bundle sections 222a1 and 222a2 is N pole. The second magnet 352 is located underneath the straight coil bundle sections 222b1 and 222b2, while the polarity of the second magnetic pole end facing the straight coil bundle sections 222b1 and 222b2 is S pole. The electric current flows into the inner edge connecting point of the second coil unit 222b and flows out from the outer edge connecting point of the second coil unit 222b (located in the lower right area of Fig. 10). Subsequently, the electric current flowing out from the second coil unit 222b then flows (through the wire at the bottom) into the outer edge connecting point of the first coil unit 222a (located in the center area of the right portion of Fig. 10) and flows out (through the wire at the bottom) from the inner edge connecting point of the first coil unit 222a. Through the aforementioned configuration, the magnet set 350 and the coil layer 222 are structured to constitute a vertical vibration module.

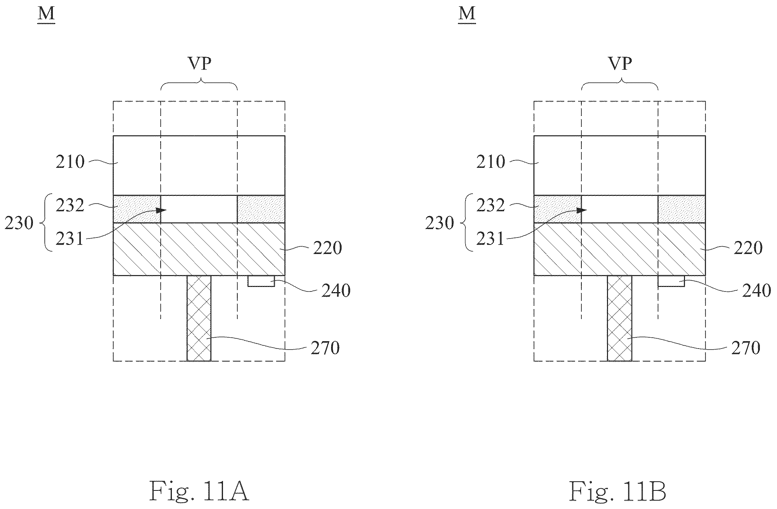

Please note that Fig. 2 may be considered the first embodiment of the present disclosure, wherein the pressure sensing element 240 is completely located within the vertically projected range VP of the high deformation region 231 (that is, the pressure sensing element 240 completely overlaps within the vertically projected range VP). Also, please refer to Fig. 11A, which is an enlarged schematic figure of the area M in Fig. 2 of a comparative example. As illustrated in Fig. 11A, the pressure sensing element 240 is located outside the vertically projected range VP of the high deformation region 231 (that is, the pressure sensing element 240 does not overlap the vertically projected range VP).

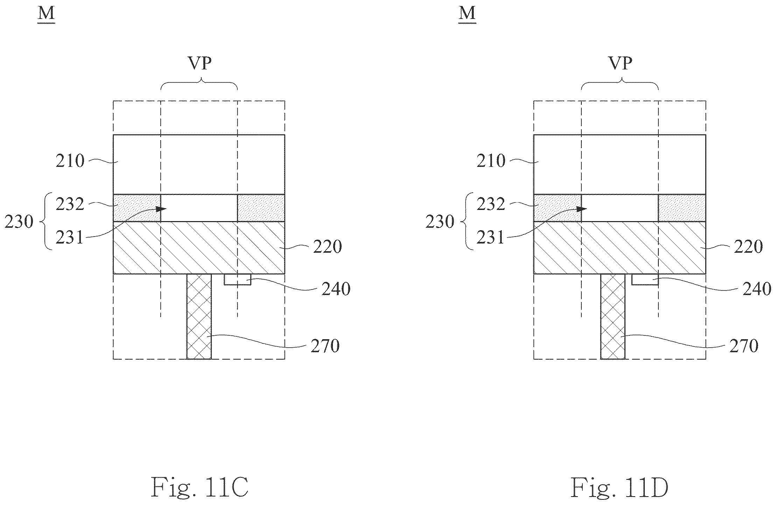

Please refer to Fig. 11B, Fig. 11C, and Fig. 11D. Fig. 11B to Fig. 11D are enlarged schematic figures of the area M in Fig. 2 of the second embodiment, the third embodiment, and the fourth embodiment, respectively. As illustrated in Fig. 11B, the pressure sensing element 240 is located outside the vertically projected range VP of the high deformation region 231 and is adjacent to the vertically projected range VP. As shown in Fig. 11C, the pressure sensing element 240 crosses the boundary of the vertically projected range VP of the high deformation region 231 (that is, the pressure sensing element 240 and the vertically projected range VP overlap partially). As shown in Fig. 11D, the pressure sensing element 240 is located within the vertically projected range VP of the high deformation region 231 and aligned with the boundary of the vertically projected region VP.

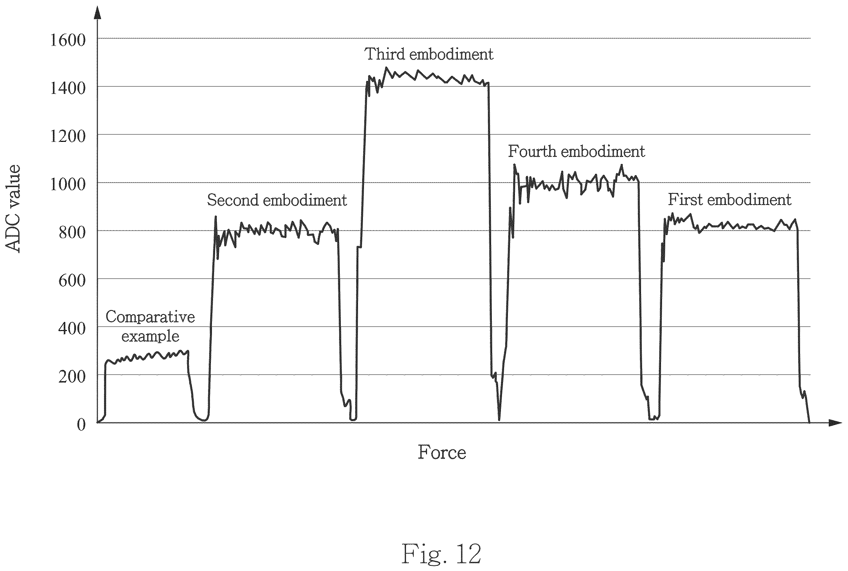

Please refer to Fig. 12, which is a pressure output signal figure of the touchpad device having the designs of the comparative example, the first embodiment, the second embodiment, the third embodiment, and the fourth embodiment, respectively. Fig. 12 displays a pressure output signal figure with data obtained by pressing the protection layer 210 of the touchpad device 200 with a force of 150g. As shown in Fig. 12, the signal strength in the comparative example is the weakest, and the signal strength in the third embodiment of Fig. 11C is the strongest, whereas the signal strengths in the first embodiment, the second embodiment, and the fourth embodiment illustrated in Fig. 2, Fig. 11B, and Fig. 11D respectively, fall between the highest level and the smallest level. Therefore, by having the pressure sensing element 240 adjacent to or at least partially overlapping the vertically projected range VP of the high deformation region 231, the pressure sensing element 240 may effectively capture deformation (that is, an increase of sensitivity) and achieve more accurate pressure detection.

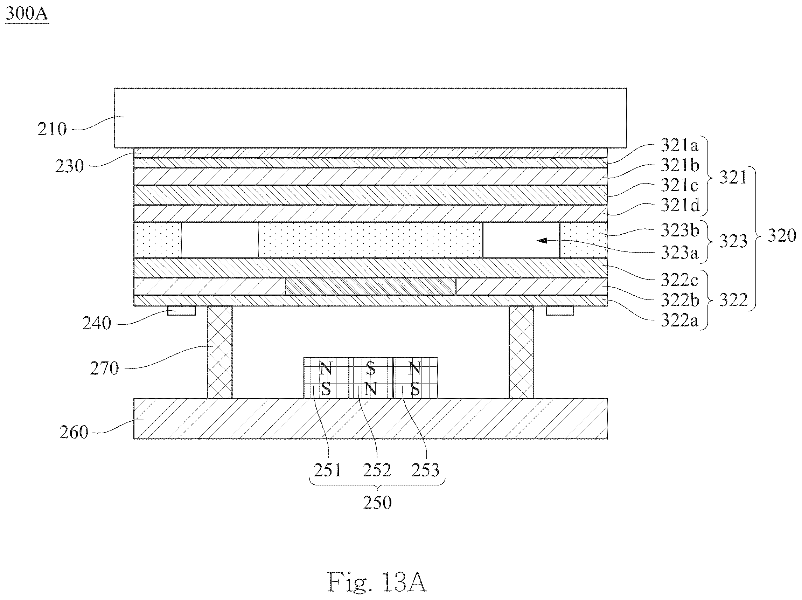

Please refer to Fig. 13A, which is a cross-sectional schematic figure of a touchpad device 300A of an embodiment of the present disclosure. As shown in Fig. 13A, the touchpad device 300A comprises a protection layer 210, a multi-layer touch circuit board 320, an adhesive layer 230, a plurality of pressure sensing elements 240, a magnet set 250, a supporting member 260, and a plurality of elastic members 270, wherein the protection layer 210, the adhesive layer 230, the pressure sensing elements 240, the magnet set 250, the supporting member 260, and the elastic members 270 are identical or similar to those of the embodiment shown in Fig. 2. Therefore, relevant explanations can reference the aforementioned description and will not be repeated here again. One thing to be noted is that the multi-layer touch circuit board 320 of the embodiment comprises a first circuit board stack 321, a second circuit board stack 322, and a bonding layer 323. The first circuit board stack 321 is disposed on one side of the adhesive layer 230 that is away from the protection layer 210. The second circuit board stack 322 is located on one side of the first circuit board stack 321 that is away from the adhesive layer 230. The bonding layer 323 is bonded between the first circuit board stack 321 and the second circuit board stack 322, and the bonding layer 323 comprises a low deformation region 323b and a high deformation region 323a. Please note that, by configuring an assembly of the protection layer 210, the adhesive layer 230, and the first circuit board stack 321 that has an equivalent hardness higher than the equivalent hardness of the second circuit board stack 322, in this way, the pressure will be concentrated mainly in the high deformation region 323a.

On the contrary, if the equivalent hardness of the assembly of the protection layer 210, the adhesive layer 230, and the first circuit board stack 321, is lower than the equivalent hardness of the second circuit board stack 322, then the deformation of the bonding layer 323 may decrease while the aforementioned assembly is pressed, resulting in a decrease of sensitivity in pressure detection.

More specifically, as shown in Fig. 13A, the first circuit board stack 321 of the multi-layer touch circuit board 320 comprises a solder mask layer 321a, a touch sensing element 321b, an insulating layer 321c, and a shielding layer 321d, which are stacked in sequence. The second circuit board stack 322 of the multi-layer touch circuit board 320 comprises a solder mask layer 322a, a coil layer 322b, and an insulating layer 322c, which are stacked in sequence from the elastic member 270 to the bonding layer 323. However, the stacked layers of the first circuit board stack 321 and the stacked layers of the second circuit board stack 322 are not limited thereto and may be adjusted flexibly according to actual requirements (for example, hardness requirements).

Since the equivalent hardness of the multi-layer touch circuit board 320 may be adjusted through the stacked layers of the first circuit board stack 321 and/or the stacked layers of the second circuit board stack 322, the material of the protection layer 210 is not limited to glass, as choices of other softer materials are available, for example Mylar, polyethylene terephthalate (PET), FR4, etc.

In several embodiments, the material of the bonding layer 323 comprises polypropylene (PP). The thickness of the bonding layer 323 is from 50 µm to 500 µm. If the thickness of the bonding layer 323 is thinner than 50 µm, the generated compression volume will be insufficient when the user presses the protection layer 210. If the thickness T of the bonding layer 323 is thicker than 500 µm, interference with the touch sensing element 321b in generating detection capacitance signals may occur.

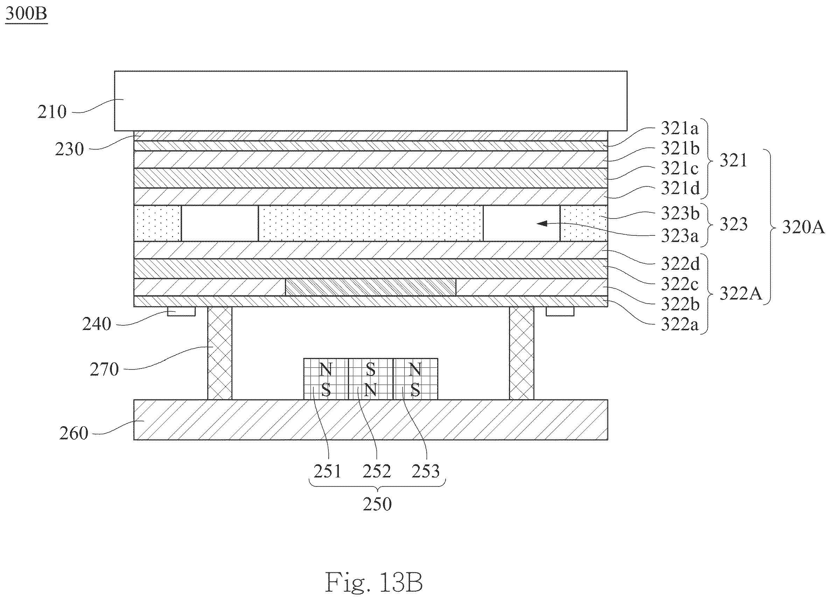

Please refer to Fig. 13B, which is a cross-sectional schematic figure of a touchpad device 300B of an embodiment of the present disclosure. As shown in Fig. 13B, the touchpad device 300B comprises a protection layer 210, a multi-layer touch circuit board 320A, an adhesive layer 230, a plurality of pressure sensing elements 240, a magnet set 250, a supporting member 260, and a plurality of elastic members 270, wherein the protection layer 210, the adhesive layer 230, the pressure sensing elements 240, the magnet set 250, the supporting member 260, and the elastic members 270 are identical or similar to those of the embodiment shown in Fig. 2. Therefore, relevant explanations can reference the aforementioned description and will not be repeated here again. It is noteworthy that, in comparison with the multi-layer touch circuit board 320 illustrated in Fig. 13A, the second circuit board stack 322A of the multi-layer touch circuit board 320A of this embodiment further comprises a metal layer 322d. The metal layer 322d is stacked between the bonding layer 323 and the insulating layer 322c. Therefore, the multi-layer touch circuit board 320A of this embodiment has one more layer than the multi-layer touch circuit board 320 shown in Fig. 13A.

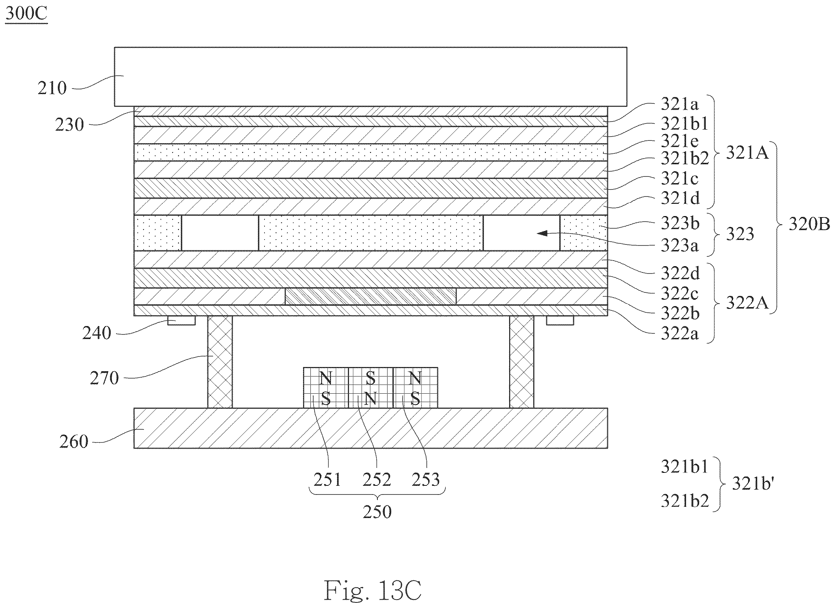

Please refer to Fig. 13C, which is a cross-sectional schematic figure of a touchpad device 300C of an embodiment of the present disclosure. As shown in Fig. 13C, the touchpad device 300C comprises a protection layer 210, a multi-layer touch circuit board 320B, an adhesive layer 230, a plurality of pressure sensing elements 240, a magnet set 250, a supporting member 260, and a plurality of elastic members 270, wherein the protection layer 210, the adhesive layer 230, the pressure sensing elements 240, the magnet set 250, the supporting member 260, and the elastic members 270 are identical or similar to those of the embodiment shown in Fig. 2. Therefore, relevant explanations can reference the aforementioned description and will not be repeated here again. It is noteworthy that, in comparison with the multi-layer touch circuit board 320A illustrated in Fig. 13B, the first circuit board stack 321A of the multi-layer touch circuit board 320B of this embodiment further comprises a bonding layer 321e, and the touch sensing element 321b' comprises a first touch electrode layer 321b1 and a second touch electrode layer 321b2 stacked on and below the two sides of the bonding layer 321e, respectively. Therefore, the multi-layer touch circuit board 320B of this embodiment has two more layers than the multi-layer touch circuit board 320A shown in Fig. 13B.

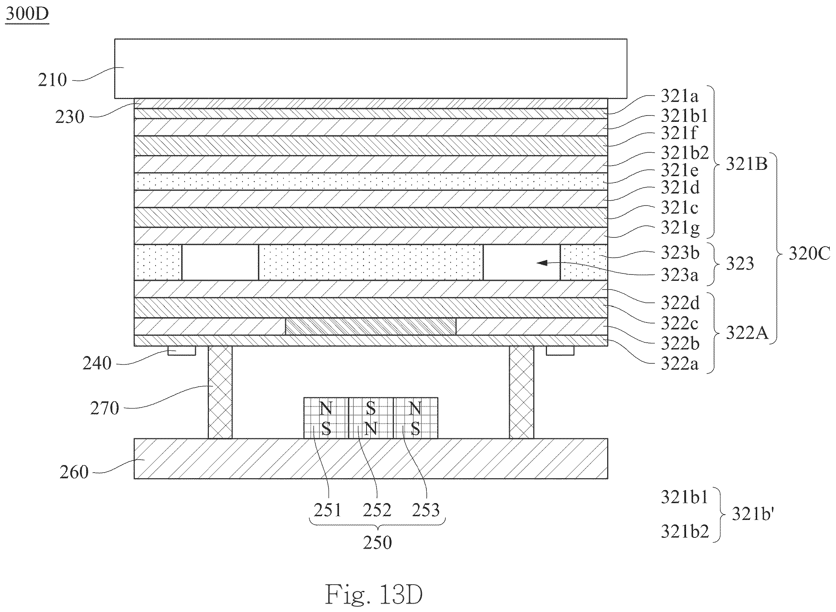

Please refer to Fig. 13D, which is a cross-sectional schematic figure of a touchpad device 300D of an embodiment of the present disclosure. As shown in Fig. 13D, the touchpad device 300D comprises a protection layer 210, a multi-layer touch circuit board 320C, an adhesive layer 230, a plurality of pressure sensing elements 240, a magnet set 250, a supporting member 260, and a plurality of elastic members 270, wherein the protection layer 210, the adhesive layer 230, the pressure sensing elements 240, the magnet set 250, the supporting member 260, and the elastic members 270 are identical or similar to those of the embodiment shown in Fig. 2. Therefore, relevant explanations can reference that aforementioned description and will not be repeated here again. It is noteworthy that, in comparison with the multi-layer touch circuit board 320B illustrated in Fig. 13C, the first circuit board stack 321B of the multi-layer touch circuit board 320C of this embodiment further comprises an insulating layer 321f and a metal layer 321g. The insulating layer 321f is stacked between the first touch electrode layer 321b1 and the second touch electrode layer 321b2, and the bonding layer 321e is modified to be stacked between the second touch electrode layer 321b2 and the shielding layer 321d. The metal layer 321g is stacked between the bonding layer 323 and the insulating layer 321c. Therefore, the multi-layer touch circuit board 320C of this embodiment has two more layers than the multi-layer touch circuit board 320B shown in Fig. 13C.

In the embodiment shown in Fig. 2, the pressure sensing element 240 is a strain gauge, and the pressure sensing element 240 is disposed on one side of the multi-layer touch circuit board 220 that is away from the protection layer 210. However, the present disclosure is not limited thereto.

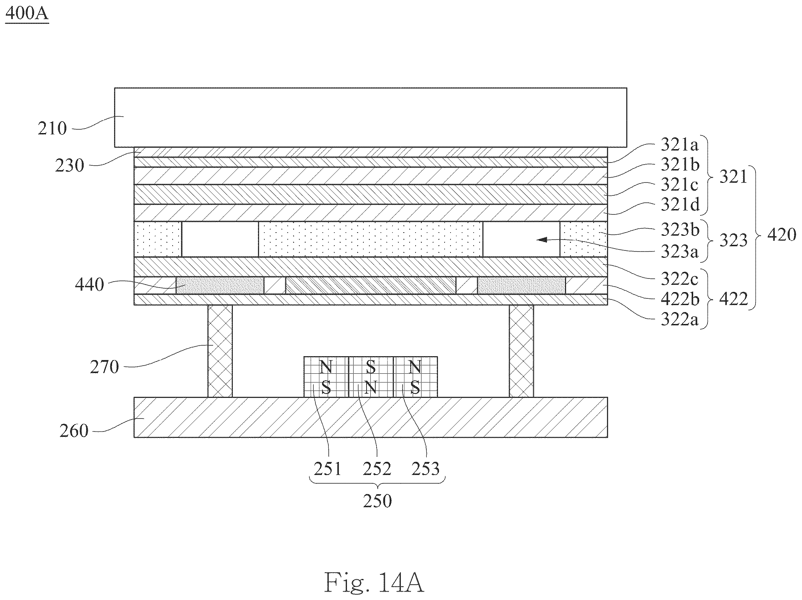

Please refer to Fig. 14A, which is a cross-sectional schematic figure of a touchpad device 400A of an embodiment of the present disclosure. As shown in Fig. 14A, the touchpad device 400A comprises a protection layer 210, a multi-layer touch circuit board 420, an adhesive layer 230, a magnet set 250, a supporting member 260, and a plurality of elastic members 270, wherein the protection layer 210, the adhesive layer 230, the magnet set 250, the supporting member 260, and the elastic members 270 are identical or similar to those of the embodiment shown in Fig. 2. Therefore, relevant explanations can reference the aforementioned description and will not be repeated here again. It is noteworthy that, in comparison with the multi-layer touch circuit board 320 illustrated in Fig. 13A, the coil layer 422b of the second circuit board stack 422 of the multi-layer touch circuit board 420 of this embodiment further comprises pressure sensing elements 440. The material of the shielding layer 321d of the first circuit board stack 321 comprises metal. Therefore, the pressure sensing element 440 is configured to detect a capacitance between the pressure sensing element 440 and the shielding layer 321d. In addition, as the supporting member 260 is a metal bracket, the pressure sensing element 440 is also configured to detect another capacitance between the pressure sensing element 440 and the supporting member 260. In other words, this embodiment detects different capacitances simultaneously through the pressure sensing element 440.

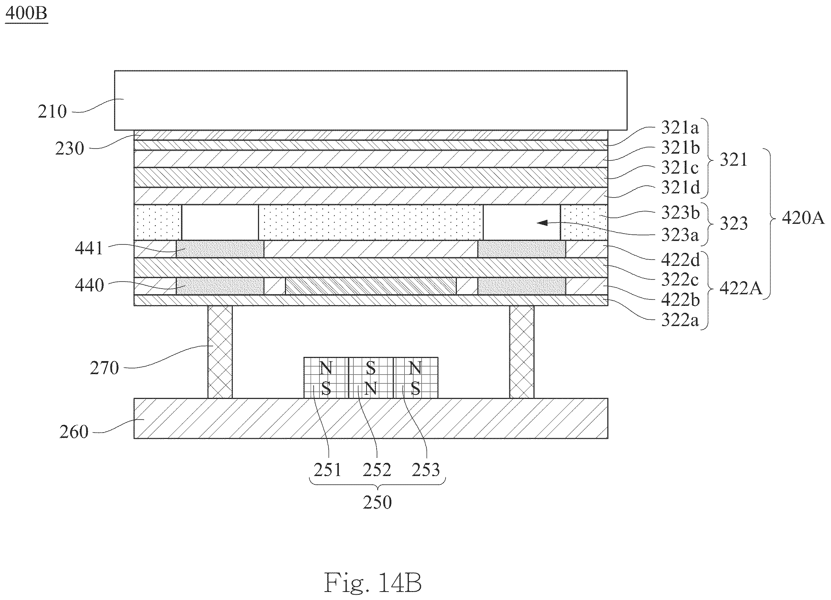

Please refer to Fig. 14B, which is a cross-sectional schematic figure of a touchpad device 400B of an embodiment of the present disclosure. As shown in Fig. 14B, the touchpad device 400B comprises a protection layer 210, a multi-layer touch circuit board 420A, an adhesive layer 230, a magnet set 250, a supporting member 260, and a plurality of elastic members 270, wherein the protection layer 210, the adhesive layer 230, the magnet set 250, the supporting member 260, and the elastic members 270 are identical or similar to those of the embodiment shown in Fig. 2. Therefore, relevant explanations can reference the aforementioned description and will not be repeated here again. It is noteworthy that, in comparison with the multi-layer touch circuit board 420 illustrated in Fig. 14A, the second circuit board stack 422A of the multi-layer touch circuit board 420A of this embodiment further comprises one other metal layer 422d. The metal layer 422d comprises one other pressure sensing element 441. The pressure sensing element 441 is configured to detect a capacitance between the pressure sensing element 441 and the shielding layer 321d. The pressure sensing element 440 is configured to detect another capacitance between the pressure sensing element 440 and the supporting member 260. In other words, this embodiment detects different capacitances through the pressure sensing elements 440, 441 separately. Furthermore, the multi-layer touch circuit board 420A of this embodiment has one more layer than the multi-layer touch circuit board 420 in Fig. 14A.

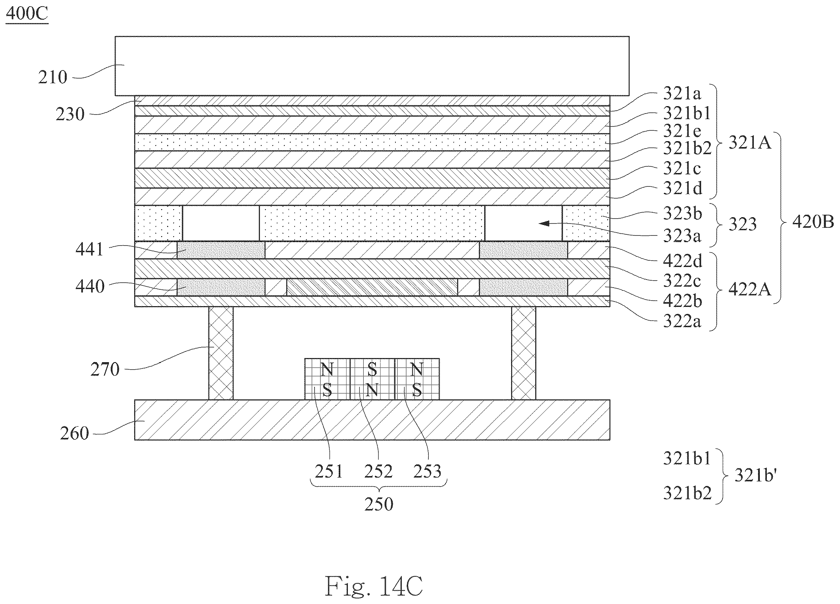

Please refer to Fig. 14C, which is a cross-sectional schematic figure of a touchpad device 400C of an embodiment of the present disclosure. As shown in Fig. 14C, the touchpad device 400C comprises a protection layer 210, a multi-layer touch circuit board 420B, an adhesive layer 230, a magnet set 250, a supporting member 260, and a plurality of elastic members 270, wherein the protection layer 210, the adhesive layer 230, the magnet set 250, the supporting member 260, and the elastic members 270 are identical or similar to those of the embodiment shown in Fig. 2. Therefore, relevant explanations can reference the aforementioned description and will not be repeated here again. It is noteworthy that the multi-layer touch circuit board 420B of this embodiment has switched to the first circuit board stack 321A shown in Fig. 13C instead of the first circuit board stack 321 shown in Fig. 14B. Therefore, the multi-layer touch circuit board 420B of this embodiment has two more layers than the multi-layer touch circuit board 420A shown in Fig. 14B.

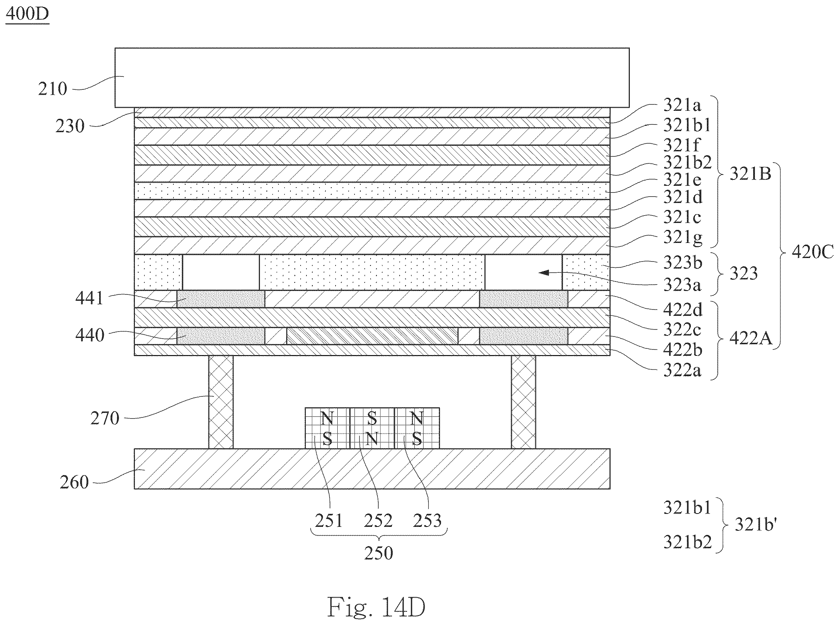

Please refer to Fig. 14D, which is a cross-sectional schematic figure of a touchpad device 400D of an embodiment of the present disclosure. As shown in Fig. 14D, the touchpad device 400D comprises a protection layer 210, a multi-layer touch circuit board 420C, an adhesive layer 230, a magnet set 250, a supporting member 260, and a plurality of elastic members 270, wherein the protection layer 210, the adhesive layer 230, the magnet set 250, the supporting member 260, and the elastic members 270 are identical or similar to those of the embodiment shown in Fig. 2. Therefore, relevant explanations can reference the aforementioned description and will not be repeated here again. It is noteworthy that the multi-layer touch circuit board 420C of this embodiment has switched to the first circuit board stack 321B shown in Fig. 13D instead of the first circuit board stack 321A shown in Fig. 14C. Therefore, the multi-layer touch circuit board 420C of this embodiment has two more layers than the multi-layer touch circuit board 420B shown in Fig. 14C.

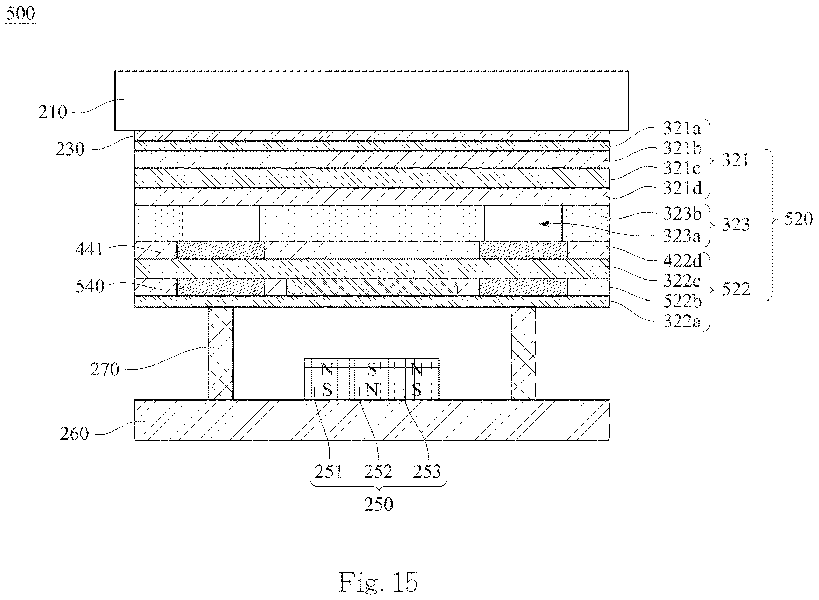

Please refer to Fig. 15, which is a cross-sectional schematic figure of a touchpad device 500 of an embodiment of the present disclosure. As shown in Fig. 15, the touchpad device 500 comprises a protection layer 210, a multi-layer touch circuit board 520, an adhesive layer 230, a magnet set 250, a supporting member 260, and a plurality of elastic members 270, wherein the protection layer 210, the adhesive layer 230, the magnet set 250, the supporting member 260, and the elastic members 270 are identical or similar to those of the embodiment shown in Fig. 2. Therefore, relevant explanations can reference the aforementioned description and will not be repeated here again. It is noteworthy that, in comparison with the second circuit board stack 422A illustrated in Fig. 14B, the multi-layer touch circuit board 520 comprises a coil layer 522b having a ground unit 540, to replace the coil layer 422b having a pressure sensing element 440. Therefore, this embodiment detects the capacitance merely through the pressure sensing element 441. Since elements used for sensing the capacitance are completely inside the multi-layer touch circuit board 520, environmental interference may be avoided.

According to the descriptions of specific embodiments of the present disclosure, it is apparent that, in the touchpad device of the present disclosure, through the design of having the pressure sensing element adjacent to or at least partially overlapping a vertically projected range of the high deformation region of one layer of the multi-layer touch circuit board or the adhesive layer, the pressure sensing can effectively capture deformation (that is, an increase of sensitivity) and achieve more accurate pressure detection. By configuring the high deformation region in the bonding layer located between the first circuit board stack and the second circuit board stack, the location and degree of deformation can be controlled more accurately, leading to the optimization of pressure sensing performance. By having the equivalent hardness of an assembly of the protection layer, the adhesive layer, and the first circuit board stack, be higher than the equivalent hardness of the second circuit board stack, the pressure will be concentrated mainly in the high deformation region. The disposition of the pressure sensing element within the multi-layer touch circuit board may not only simplify the electric circuit design, but also reduce interference from the external environment, which improves sensing reliability. By disposing the elastic member within the vertically projected range of the high deformation region, the touchpad device will deform better in response to vertical vibrations, thus enhancing the effect of vertical vibration sensing.

The above preferred embodiments are presented to disclose the present disclosure, but shall not be interpreted to limit the scope, applicability, or configuration of the present disclosure in any way. Those skilled in the art may use any alternative embodiments that are modified or changed without departing from the spirit and scope of the present disclosure. Thus, the protection scope of the present disclosure shall be included in the appended claims.

### [ COMPONENT SYMBOL]

100: Electronic device
110: Host computer
111: Casing part
111a: Recessed groove
120: Display
200, 300A, 300B, 300C, 300D, 400A, 400B, 400C, 400D, 500: Touchpad device
210: Protection layer
210a: Bonding area
210b: Non-bonding area
220, 320, 320A, 320B, 320C, 420, 420A, 420B, 420C, 520: Multi-layer touch circuit board
221, 321b, 321b': Touch sensing element
221a, 321b1: First touch electrode layer
221b, 321b2: Second touch electrode layer
221c: Processing unit
222, 322b, 422b, 522b: Coil layer
222a: First coil unit
222a1, 222a2, 222b1, 222b2: Straight coil bundle section
222b: Second coil unit
223, 321d: Shielding layer
224, 321c, 321f, 322c: Insulating layer
225, 321a, 322a: Solder mask layer
226: Nickel layer
227: Gold layer
228: Cover layer
230: Adhesive layer
231, 323a: High deformation region
232, 323b: Low deformation region
240, 440, 441: Pressure sensing element
250, 350: Magnet set
251, 351: First magnet
252, 352: Second magnet
253: Third magnet
260: Supporting member
270: Elastic member
321, 321A, 321B: First circuit board stack
322, 322A, 422, 422A, 522: Second circuit board stack
321g, 322d, 422d: Metal layer
321e, 323: Bonding layer
540: Ground unit
A1: First sensing area
A2: Second sensing area
D: Arrangement direction
G: Gap
M: Area
P: Coil distance
S1, S2: Distance
T: Thickness
VP: Vertically projected range
W: Width

## Claims

1. A touchpad device, comprising
a protection layer;
a multi-layer touch circuit board;
an adhesive layer, disposed between the protection layer and the multi-layer touch circuit board; and
a pressure sensing element, disposed on the multi-layer touch circuit board,
wherein one layer of the multi-layer touch circuit board or the adhesive layer has a non-homogeneous material configuration and comprises a high deformation region and a low deformation region;
wherein the pressure sensing element is adjacent to or at least partially overlaps a vertically projected range of the high deformation region.

2. The touchpad device of Claim 1, wherein the adhesive layer comprises the high deformation region, and the high deformation region is a through slot.

3. The touchpad device of Claim 2, wherein the pressure sensing element is a strain gauge, and the pressure sensing element is disposed on one side of the multi-layer touch circuit board away from the protection layer.

4. The touchpad device of one of the preceding claims, wherein the multi-layer touch circuit board comprises:
a first circuit board stack, disposed on one side of the adhesive layer away from the protection layer;
a second circuit board stack, located on one side of the first circuit board stack away from the adhesive layer; and
a bonding layer, bonded between the first circuit board stack and the second circuit board stack, and comprising the high deformation region.

5. The touchpad device of Claim 4, wherein the pressure sensing element is a strain gauge, and the pressure sensing element is disposed on one side of the multi-layer touch circuit board away from the protection layer.

6. The touchpad device of Claim 5, wherein an equivalent hardness of an assembly of the protection layer, the adhesive layer, and the first circuit board stack is higher than an equivalent hardness of the second circuit board stack.

7. The touchpad device of Claim 5 or 6, wherein a material of the bonding layer comprises polypropylene (PP), and a thickness of the bonding layer is from 50 µm to 500 µm.

8. The touchpad device of one of Claims 5 to 7, wherein the high deformation region is a through slot.

9. The touchpad device of one of Claims 4 to 8, wherein the pressure sensing element is a self-capacitance force sensor, and the pressure sensing element is disposed within the multi-layer touch circuit board.

10. The touchpad device of Claim 9, wherein the pressure sensing element is disposed on the second circuit board stack, the first circuit board stack comprises a metal layer, and the pressure sensing element is configured to detect a capacitance between the pressure sensing element and the metal layer.

11. The touchpad device of Claim 9 or 10, wherein an equivalent hardness of an assembly of the protection layer, the adhesive layer, and the first circuit board stack is higher than an equivalent hardness of the second circuit board stack.

12. The touchpad device of one of Claims 9 to 11, wherein a material of the bonding layer comprises polypropylene (PP), and a thickness of the bonding layer is from 50 µm to 500 µm.

13. The touchpad device of one of Claims 9 to 12, wherein the high deformation region is a through slot.

14. The touchpad device of one of Claims 9 to 13, further comprising:
a metal bracket, located on one side of the multi-layer touch circuit board away from the protection layer; and
an elastic member, disposed between the multi-layer touch circuit board and the metal bracket,
wherein the pressure sensing element is configured to detect a capacitance between the pressure sensing element and the metal bracket.

15. The touchpad device of Claim 14, wherein the elastic member is located within a vertically projected range of the high deformation region.
